# EUROPEAN PATENT APPLICATION

(11) **EP 4 613 465 A1**
(43) Date of publication of application: **10.09.2025**
(21) Application number: 24874378.3
(22) Date of filing: 22.08.2024
(51) Int. Cl.: B29C 70/18, B29C 43/20, B29C 70/68, B32B 5/28, B62D 29/04

(54) **STRUCTURAL MATERIAL FOR AUTOMOBILE AND METHOD FOR PRODUCING SAME**

(30) Priority: 05.10.2023 JP 2023173529
(71) Applicant: Arisawa Mfg. Co., Ltd., Joetsu-shi, Niigata 943-8610 (JP)
(72) Inventor: TANAKA, Hiroshi, Joetsu-shi, Niigata 943-8610 (JP); INADA, Keito, Joetsu-shi, Niigata 943-8610 (JP); WATABE, Kenichi, Joetsu-shi, Niigata 943-8610 (JP); SUZUKI, Hiroko, Toyota-shi, Aichi 471-8571 (JP)
(74) Representative: Kramer Barske Schmidtchen Patentanwälte PartG mbB
(86) International application number: PCT/JP2024/029865
(87) International publication number: WO 2025/074764

(57) **Abstract**

Provided are: an automotive structural material that makes it possible to prevent chipping and electrolytic corrosion without using protection tape, also obviates having to adjust unevenness for the purpose of painting, and moreover can be manufactured in a short time; and a method for manufacturing the automotive structural material. The present invention pertains to an automotive structural material that contains carbon-fiber-reinforced plastic, the automotive structural material being characterized by having a base layer 3 composed of a cured sheet-molding compound 1 containing staple carbon fiber and a thermosetting resin, and a protective layer 4 that is laminated on the base layer 3 and is composed of a cured glass paper prepreg 2 or a glass cloth prepreg containing glass fiber and a thermosetting resin, the base layer 3 and the protective layer 4 being integrally cured.

## Description

### TECHNICAL FIELD

The present invention relates to an automotive structural material and a method for manufacturing the same.

### BACKGROUND ART

There are cases where carbon-fiber-reinforced plastics (CFRP) composed of carbon-fiber-containing sheet molding compounds (SMCs) are employed as structural materials (interior linings) for automobiles.

In such cases, it is necessary to (A) address CFRP chipping and carbon fiber microfracturing that occur when stones have hit a CFRP member during travel (employ a measure against chipping) and (B) address a galvanic current that is produced due to sites where steel or aluminum is joined to the CFRP being wetted with rain or dew (employ a measure against electrolytic corrosion).

Affixing a protective film (protection tape) such as that disclosed in, e.g., Patent Document 1, in which an acrylic adhesive agent is applied to one surface of a substrate composed of polyurethane or polyester, to the surface of a CFRP member can yield the aforementioned effects (A) (measure against chipping) and (B) (measure against electrolytic corrosion).

### [Prior-art Documents]

[Patent Document 1] Unexamined Patent Application Publication No. 2023-80853

### DISCLOSURE OF THE INVENTION

### PROBLEMS THE PRESENT INVENTION IS INTENDED TO SOLVE

Any recesses and protrusions on the surface of a CFRP member, which has been heated and molded in a single action, are removed, and an inactive layer on the surface of the CFRP molded article is removed by sanding or machining, whereupon the protection tape described above is affixed to the surface of the CFRP member.

However, in work relating to affixing the protection tape, wrinkles tend to form and lifting tends to occur, which are troublesome, and if inadequately affixed, the protection tape could peel away while an automobile is traveling. If the tape peels away, then the tape will not serve as a measure against chipping or a measure against electrolytic corrosion. Moreover, should there be premature peeling of the tape at sites where steel or aluminum is joined to the CFRP, then water droplets of rain, dew, or condensation could collect between the CFRP member and the tape, a galvanic current could flow, with the water droplets (liquid) acting as an electrolyte aqueous solution, the CFRP serving as a positive electrode, and the steel or aluminum serving as a negative electrode, and electrolytic corrosion could advance. If electrolytic corrosion occurs, then the steel or aluminum will corrode, eventually becoming unable to serve as a structure.

Examples of methods that yield the aforementioned effects (A) (measure against chipping) and (B) (measure against electrolytic corrosion) without using the aforementioned protection tape include methods in which a layer serving as a measure against chipping or a layer serving as a measure against electrolytic corrosion is formed via painting. In such instances as well, any recesses and protrusions on the surface of a CFRP member are removed, and an inactive layer on the surface of the CFRP molded article is removed by sanding or machining, similarly to when performing treatment before affixing protection tape. Any remaining recesses will then need to be filled with putty to produce a foundation (this process being referred to as an unevenness adjustment step), whereupon undercoating, intermediate coating, and finishing coating need to be performed on the foundation to form a painting layer.

The undercoating, intermediate coating, and finishing coating steps are described below in further detail.
- Undercoating: A step for forming an undercoat layer in order to have adhesion with a base for the CFRP surface after unevenness adjustment and resistance to corrosion by alkalis or acids on the CFRP surface, and raise adhesiveness with respect to an intermediate coat layer. The thickness of the undercoat layer is 25-30 µm.
- Intermediate coating: A step for providing an intermediate coating in order to maintain the smoothness of the undercoat layer, achieve impact resistance for the entire painting surface, and raise adhesiveness with respect to a finishing coat layer. The thickness of the intermediate coat layer is 40-45 µm (the intermediate coat layer mainly functions as a measure against chipping). In cases where color or a design is to be painted or printed onto the coating, this process is implemented on the intermediate coat layer. Another purpose of the intermediate coat layer is to form a smooth foundation in order to paint or print color or a design.
- Finishing coating: A step for providing a finishing coat layer in order to maintain luster and achieve an aesthetically pleasing appearance, scratch resistance, weather resistance, and contamination resistance. The thickness of the finishing coat layer is 40-90 µm (the undercoat layer, the intermediate coat layer, and the finishing coat layer function as measures against electrolytic corrosion).

In each of the undercoating, intermediate coating, and finishing coating steps, drying and curing procedures are carried out before the process advances to the next step. For the purpose of the intermediate coating, the undercoat layer is sprayed using a spray gun to form a coating film, after which the coating is dried and cured. The undercoat layer is polished using #400 sandpaper to produce a smooth foundation for the intermediate coat layer. Similarly, in regard to the intermediate coat layer, a coating film is formed, dried, and cured, then polished using #600 sandpaper to produce a smooth foundation for the finishing coat layer. The finishing coat layer, which is produced last, is sanded using #1000 sandpaper to create a lustrous and aesthetically pleasing appearance.

Additionally, in the undercoating, intermediate coating, and finishing coating steps, the coating film thickness of single layers may be reduced and double-coating may be performed in order to avoid microcracking resulting from curing shrinkage during drying and curing as well as peeling away from the lower layers (this is because cracking may occur when a paint is thickly applied in a single action).

Therefore, it is possible to achieve the aforementioned effects (A) (measure against chipping) and (B) (measure against electrolytic corrosion) using painting, but numerous steps and a high workload are required before the painting is finished.

The present invention was contrived in view of the foregoing circumstances, it being an object of the present invention to provide: an innovative automotive structural material that makes it possible to prevent chipping and electrolytic corrosion without using protection tape, also obviates having to adjust unevenness for the purpose of painting, and moreover can be manufactured in a short time; and a method for manufacturing the automotive structural material.

### MEANS FOR SOLVING THE AFOREMENTIONED PROBLEMS

The gist of the present invention is described below with reference to the accompanying drawings.

A first aspect of the present invention pertains to an automotive structural material that contains carbon-fiber-reinforced plastic, the automotive structural material being characterized by having
a base layer 3 composed of a cured sheet-molding compound 1 containing staple carbon fiber and a thermosetting resin, and
a protective layer 4 that is laminated on the base layer 3 and is composed of a cured glass paper prepreg 2 or a glass cloth prepreg containing glass fiber and a thermosetting resin,
the base layer 3 and the protective layer 4 being integrally cured.

A second aspect of the present invention pertains to the automotive structural material according to the first aspect, characterized in that the thickness of the protective layer 4 is 0.15-0.50 mm.

A third aspect of the present invention pertains to the automotive structural material according to the second aspect, characterized in that the electrical breakdown voltage is 3 kV or higher.

A fourth aspect of the present invention pertains to the automotive structural material according to the second aspect, characterized in that the electrical breakdown voltage is 5 kV or higher.

A fifth aspect of the present invention pertains to the automotive structural material according to any of the first to fourth aspects, characterized in that the protective layer 4 includes glass paper having a basis weight of 50 g/m² or higher.

A sixth aspect of the present invention pertains to the automotive structural material according to any of the first to fourth aspects, characterized in that the protective layer 4 includes glass cloth having a basis weight of 100 g/m² or higher.

A seventh aspect of the present invention pertains to a method for manufacturing an automotive structural material that contains carbon-fiber-reinforced plastic, the method being characterized by including:
a lamination step for laminating a semi-cured-state sheet-molding compound 1 that contains staple carbon fiber and a thermosetting resin, and a semi-cured-state glass paper prepreg 2 or glass cloth prepreg that contains glass fiber and a thermosetting resin; and
a curing step for integrally curing the laminated sheet-molding compound 1 and glass paper prepreg 2 or glass cloth prepreg through the application of heat under applied pressure.

An eighth aspect of the present invention pertains to the method for manufacturing an automotive structural material according to the seventh aspect, characterized in that the resin content of the glass paper prepreg 2 or the glass cloth prepreg is 80-95 wt%.

A ninth aspect of the present invention pertains to the method for manufacturing an automotive structural material according to the seventh aspect, characterized in that the resin flow in the glass paper prepreg 2 or the glass cloth prepreg is 50-80%, the resin flow being expressed by the formula below. Resin flow (%) = (amount (g) of resin that has flowed out when press-molding is performed at 150°C and 0.3 MPa)/(weight (g) of prepreg before resin flows out due to press molding)

A tenth aspect of the present invention pertains to the method for manufacturing an automotive structural material according to the eighth aspect, characterized in that the resin flow in the glass paper prepreg 2 or the glass cloth prepreg is 50-80%, the resin flow being expressed by the formula below. Resin flow (%) = (amount (g) of resin that has flowed out when press-molding is performed at 150°C and 0.3 MPa)/(weight (g) of prepreg before resin flows out due to press molding)

An eleventh aspect of the present invention pertains to the method for manufacturing an automotive structural material according to any of the seventh to tenth aspects, characterized in that the glass paper prepreg 2 includes glass paper having a basis weight of 50 g/m² or higher.

A twelfth aspect of the present invention pertains to the method for manufacturing an automotive structural material according to any of the seventh to tenth aspects, characterized in that the glass cloth prepreg includes glass cloth having a basis weight of 100 g/m² or higher.

### EFFECT OF THE INVENTION

Due to being configured as described above, the present invention provides: an innovative automotive structural material that makes it possible to prevent chipping and electrolytic corrosion without using protection tape, also obviates having to adjust unevenness for the purpose of painting, and moreover can be manufactured in a short time; and a method for manufacturing the automotive structural material.

### BRIEF DESCRIPTION OF THE DRAWINGS

FIG. 1 is an explanatory perspective view of the present example;
FIG. 2 is a schematic diagram of a prepreg manufacturing device (vertical coater);
FIG. 3 is an explanatory perspective view illustrating a lamination step;
FIG. 4 is a schematic cross-sectional diagram illustrating a curing step;
FIG. 5 is a graph illustrating a temperature program and a pressure program;
FIG. 6 is a schematic cross-sectional diagram showing one example of autoclave molding;
FIG. 7 is a schematic diagram of a SMC manufacturing device;
FIG. 8 is an explanatory perspective view of a SMC product;
FIG. 9 is an explanatory perspective view illustrating the density of fibers in the SMC product;
FIG. 10 is an explanatory cross-sectional diagram of the essential part of FIG. 9;
FIG. 11 is an explanatory perspective view of a molded (cured) SMC;
FIG. 12 is an explanatory cross-sectional diagram of a SMC provided with a prior-art painting layer;
FIG. 13 is an explanatory cross-sectional diagram illustrating a surface cutting process;
FIG. 14 is an explanatory cross-sectional diagram illustrating filling with putty after the surface cutting process;
FIG. 15 is an explanatory view illustrating a post-hammering crosscutting test; and
FIG. 16 is a schematic diagram illustrating an electrical breakdown test.

### BEST MODE FOR CARRYING OUT THE INVENTION

Preferred embodiments of the present invention are briefly described below by indicating the effects of the present invention on the basis of the drawings.

The chipping described above is satisfactorily prevented using a protective layer 4 composed of a cured glass paper prepreg 2 or a glass cloth prepreg, the protective layer 4 being laminated on a base layer 3.

The protective layer 4 is a glass-fiber-reinforced resin layer having electrical insulation properties. The base layer 3 and the protective layer 4 are integrally cured, whereby the two layers are satisfactorily bonded, and peeling and lifting of the protective layer 4 do not readily occur (pooling of water droplets of rain, dew, or condensation between the base layer 3 and the protective layer 4 is suppressed). Thus, the electrolytic corrosion described above is also satisfactorily prevented.

Furthermore, the protective layer 4 is formed by using a glass paper prepreg 2 or a glass cloth prepreg that is capable of retaining a large amount of resin; therefore, even if there are recesses in the surface of the sheet-molding compound when the protective layer 4 is integrally cured with the base layer 3, the recesses can be filled with the prepreg resin, and the surface (protective-layer-side surface) can be made as smooth as possible. Thus, it is also possible to obviate having to adjust unevenness for the purpose of painting (design painting that is not a measure against chipping or a measure against electrolytic corrosion).

The base layer 3 and the protective layer 4 can be integrally molded at the same time by laminating the semi-cured-state sheet-molding compound 1 and the semi-cured-state glass paper prepreg 2 or glass cloth prepreg and then heating the resulting assembly under applied pressure, and measures against chipping and electrolytic corrosion can be implemented more effectively than when protective tape is affixed or when a prepreg is painted.

The sheet-molding compound 1 (carbon-fiber-containing SMC 1) of the base layer 3, which shall be described in detail later, is lighter than a glass-fiber-containing SMC and can be cured in the shortest time among thermosetting FRPs; therefore, the molding cycle shortens (approaches a working time for metal press molding). Moreover, the sheet-molding compound 1, uniquely among FRPs, is an isotropic material; therefore, the sheet-molding compound 1 is suitable as an automotive structural material in that, *inter alia,* the material can be designed with the same sensory-related criteria as steel. Because the aforementioned measures against chipping and electrolytic conversion are achieved using the protective layer, the present invention is exceptionally suitable as an automotive structural material.

### [Examples]

Specific examples of the present invention are described below with reference to the drawings.

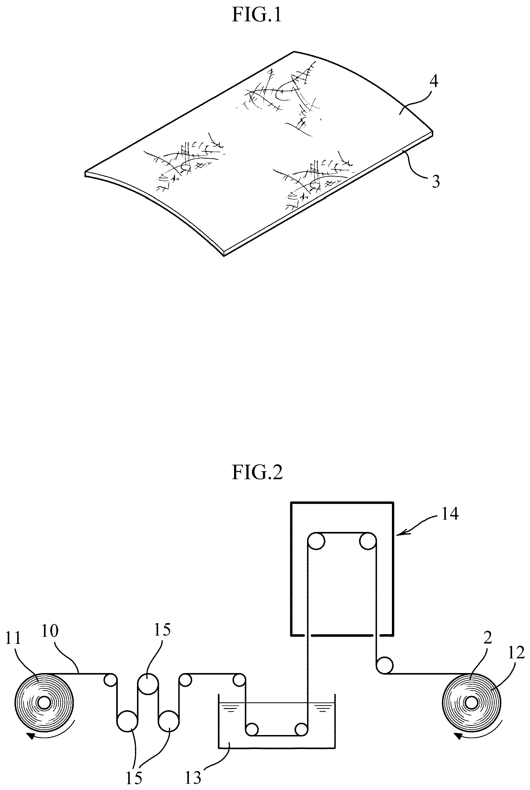

The present example pertains to an automotive structural material that contains carbon-fiber-reinforced plastic (CFRP). As shown in FIG. 1, the automotive structural material is characterized by having a base layer 3 composed of a cured sheet-molding compound 1 (carbon-fiber-containing SMC 1) containing staple carbon fiber and a thermosetting resin, and a protective layer 4 that is laminated on the base layer 3 and is composed of a cured glass paper prepreg 2 containing glass fiber and a thermosetting resin, the base layer 3 and the protective layer 4 being integrally cured.

In order to satisfactorily prevent chipping, it is desirable for the protective layer 4 to have a thickness of 0.15-0.50 mm. In the present example, the thickness of the protective layer 4 is 0.20 mm. The thickness of the base layer 3 is about 2-8 mm and may be set, as appropriate, in accordance with the usage. In the present example, the thickness of the base layer 3 is 2.7 mm.

In order to satisfactorily prevent electrolytic corrosion, it is desirable for the electrical breakdown voltage in the present example to be 3 kV or higher. In the present example, the electrical breakdown voltage is 4.48 kV. The electrical breakdown voltage is even more preferably 5 kV or higher.

It is desirable for the protective layer 4 to be a cured glass paper prepreg 2 including glass paper having a basis weight of 50 g/m² or higher, the glass paper prepreg 2 having anisotropy in regard to being stronger in the length direction than in the width direction, or a cured glass cloth prepreg including glass cloth having a basis weight of 100 g/m² or higher. The cured articles can be impregnated with resin in an amount sufficient to fill recesses in the surface of the sheet-molding compound 1 and can be coated with resin by a vertical coater for the purpose of producing a prepreg. In the present example, the protective layer is a cured glass paper prepreg 2 including glass paper having a basis weight of 50 g/m².

Specifically, the present example has a two-phase layered structure including the anisotropic glass paper prepreg layer (fiber-oriented anisotropic nonwoven-fabric fiber substrate layer; protective layer) and the carbon-fiber-containing SMC layer (base layer).

"Prepreg" refers to a resin-impregnated fiber substrate. The resin is not completely cured; instead, curing is stopped prematurely and a semi-cured state is assumed. The prepreg is a material configured such that, in a subsequent press-molding step or autoclave-molding step, the prepreg is softened so that the prepreg can conform to a mold (so that the prepreg can be shaped into a desired form), the resin is completely cured via the application of pressure under heating in press molding or autoclave molding, so that a FRP having the desired form is obtained.

### <Manufacturing method>

The present example can be manufactured using, e.g.: a lamination step for laminating a semi-cured-state sheet-molding compound 1 (carbon-fiber-containing SMC 1) that contains staple carbon fiber (obtained by cutting continuous carbon fiber to a short length) and a thermosetting resin, and a semi-cured-state glass paper prepreg 2 or glass cloth prepreg that contains glass fiber and a thermosetting resin; and a curing step for integrally curing the laminated sheet-molding compound 1 and glass paper prepreg 2 or glass cloth prepreg through the application of heat under applied pressure.

A well-known (commercially available) configuration can be employed, as appropriate, for the sheet-molding compound 1 serving as the base layer 3. For example, it is possible to employ a configuration in which a vinyl ester resin that has characteristics such that the resin is cured by being heated at 150°C for 5 minutes, and that has a carbon fiber content by weight of 50 wt% and a resin content by weight of 50 wt%, is used as a resin compound.

Additionally, it is possible for the glass paper prepreg 2 or glass cloth prepreg that is to be used, and that serves as the protective layer 4, to have a resin content of 80-95 wt%.

Furthermore, the glass paper prepreg 2 or glass cloth prepreg to be used can have a resin flow (described later) of 50-80%.

The manufacturing method shall now be described in greater detail.

The method for manufacturing the glass paper prepreg 2 (or glass cloth prepreg) used in the lamination step shall now be described. FIG. 2 is a schematic diagram of a vertical coater for coating prepregs. In the vertical coater, a resin impregnation tank 13 for impregnating glass paper 10 with resin, and a heating part 14 (vertical semi-curing zone) through which the resin-impregnated glass paper 10 that has passed through the resin impregnation tank 13 is allowed to pass in the up-down direction and which heats the resin with which the glass paper 10 is impregnated to semi-cure the resin, are provided between a feeding part 11 that feeds out the wound-state glass paper 10 and a winding part 12 that winds the glass paper prepreg 2 impregnated with the resin. In the drawings, reference symbol 15 indicates tension rollers.

It is possible to continuously coat prepregs (manufacture prepregs) in the vertical coater by placing the glass paper 10 on the feeding part 11, introducing the glass paper 10 into the resin impregnation tank 13 to impregnate the glass paper 10 with resin within the tank, curing the resin with which the glass paper 10 is impregnated and coated in the vertical semi-curing zone (heating part 14), and winding the semi-cured glass paper prepreg 2 using the winding part 12.

A specific description shall be given in regard to methods for producing a carbon-fiber-containing SMC 1 having a cylindrical shape (shape of the curved surface of a round columnar body; semicylindrical shape) that has a width of 1000 mm and a length of 1500 mm, and a painting foundation (protective layer 4) that does not require unevenness adjustment for the purpose of painting or printing.

The prepreg is coated using the vertical coater described above. Roll-wound glass paper 10 having a unit basis weight of 50 g/m², a width of 1040 mm, and a length of 100 m is placed on the feeding part 11. The tensile strength of the glass paper 10 is 5 N/15 mm in the length direction thereof and 2 N/15 mm in the width direction thereof, and the glass paper 10 has anisotropy in regard to being stronger in the length direction than in the width direction.

A resin containing a phenoxy resin and a urethane acrylate resin in a ratio of 15:85, or a resin having a urethane acrylate resin content of 100%, is charged into the resin impregnation tank of the vertical coater. The glass paper 10 is impregnated with the resin when passed through the resin impregnation tank in which the resin is stored and then assumes a semi-cured state when passed through the semi-curing zone.

It is preferable to use an impregnation method (dipping method) in which the entirety of the glass paper is immersed in the resin impregnation tank, as shown in FIG. 2, as the method for impregnating the glass paper 10 with the resin. In addition to the dipping method, it is also permissible to use, as the prepreg coating method, a hot melt method in which heated molten resin is pushed in from one surface of the fiber substrate using pressure applied by a roll or a press plate, so as to cause the fiber substrate to be fully impregnated (to produce a state in which the fiber substrate is uniformly impregnated with the resin) using temperature and pressure in a subsequent step for press-molding or autoclave-molding the prepreg. However, in order to realize the effect of obviating having to adjust unevenness for the purpose of a painting foundation, a dipping method in which the glass paper is sufficiently impregnated with resin at the prepreg coating step is optimal.

In the present example, the heating temperature in the semi-curing zone (heating part 14) for the prepreg in the vertical coater is set to 150°C; however, the temperature and the coating speed in the semi-curing zone are to be established, as appropriate, in accordance with the length and heating performance of the semi-curing zone and the gelling time of the resin so that the resulting prepreg attains a desired level of semi-curing. For example, the temperature of the semi-curing zone may be 150-180°C, etc., and the coating speed is to be increased, etc., in consideration of the retention time within the semi-curing zone, the gelling time of the resin, and the semi-cured state of the resin with which the prepreg is impregnated after passing through the semi-curing zone. The resulting prepreg is wound by the winding part 12. The present example has been described using a vertical coater in which the semi-curing zone extends in the vertical direction (up-down direction), but it is also permissible to use a lateral coater in which a prepreg semi-curing zone extends in a lateral direction (front-rear direction or left-right direction).

During the prepreg coating, the inventors tested materials in which the tensile strength of the glass paper was less than 5 N/15 mm in the length direction and less than 2 N/15 mm in the width direction, but due to forward tension and backward tension during the prepreg coating, the materials ended up being torn in the length direction or the width direction, and it was impossible to carry out continuous coating. Therefore, it is desirable for the tensile strength of the glass paper used in the prepreg coating to be 5 N/15 mm or higher in the length direction and 2 N/15 mm or higher in the width direction.

The resin with which the prepreg is impregnated and coated assumes a semi-cured state, but the term "semi-cured" encompasses a broad range of semi-cured states, from states in which the resin is tacky and will adhere to a hand when the prepreg surface is manually touched to states in which the prepreg surface is smooth enough to allow the prepreg to be handled like paper as is the case with copy paper. The semi-cured state is determined according to the resin flow of the prepreg. The resulting prepreg is cut into one set of four segments of an established size (e.g., 200 mm × 200 mm), the segments are press molded at an established temperature and pressure (temperature and pressure at which curing occurs at a particular impregnating-resin content; in the present example, a temperature of 150°C and a pressure of 0.3 MPa) by using a press-molding machine, and the degree to which the prepreg is semi-cured is determined according to the amount of resin that flows out after molding. In this determination method, the fiber substrate (glass paper in this instance) stops instead of flowing together with the resin; therefore, the state of semi-curing can be measured according to the state of spreading in which the resin has flowed out (resin flow). A large amount of resin flows out in a state in which the resin is tacky and will adhere to a hand, and a small amount of resin flows out in a state in which the prepreg surface is smooth enough to allow the prepreg to be handled like paper. The degree to which the prepreg is semi-cured is determined according to the percentage of the weight of the resin that has flowed out to the weight of the prepreg before the resin flowed out. In the present example, the resin flow is defined as a percentage derived from the following formula. Resin flow (%) = (amount (g) of resin that has flowed out when press-molding is performed at 150°C and 0.3 MPa)/(weight (g) of prepreg before resin flows out due to press molding)

The term "amount (g) of resin that has flowed out" refers to "the weight of the prepreg before resin flows out due to press molding less the weight of the prepreg after resin has flowed out after press molding."

Various tests were carried out while varying the prepreg coating conditions in the vertical coater (e.g., coating speed, resin viscosity, temperature setting for prepreg semi-curing zone, and the like) to determine optimal coating conditions for the glass paper prepreg in regard to a measure against chipping, and a glass paper prepreg 2 having a resin content of 80 wt% and a resin flow of 50% was obtained. The glass paper prepreg 2 having a resin content of 80 wt% and a resin flow of 50% was prepared as a single segment sized to have a width of 1000 mm and a length of 1500 mm (at this point in the process, the glass paper prepreg 2 was in the semi-cured state and was not cured).

The carbon-fiber-containing SMC 1 was also prepared in addition to the glass paper prepreg 2 obtained as described above. Specifically, the resin compound (vinyl ester resin that has characteristics such that the resin is cured by being heated at 150°C for 5 minutes) was adjusted to 1000 g/m², and the cut carbon fiber was adjusted to 1000 g/m² (the carbon fiber content by weight was set to 50 wt%, and the resin content by weight was set to 50 wt%). A carbon-fiber-containing SMC 1 for which the total basis weight of the resin compound and the fiber was 2000 g/m² was prepared in the form of two segments sized to have a width of 1000 mm and a length of 1500 mm (at this point in the process, the carbon-fiber-containing SMC 1 was in the semi-cured state and was not cured).

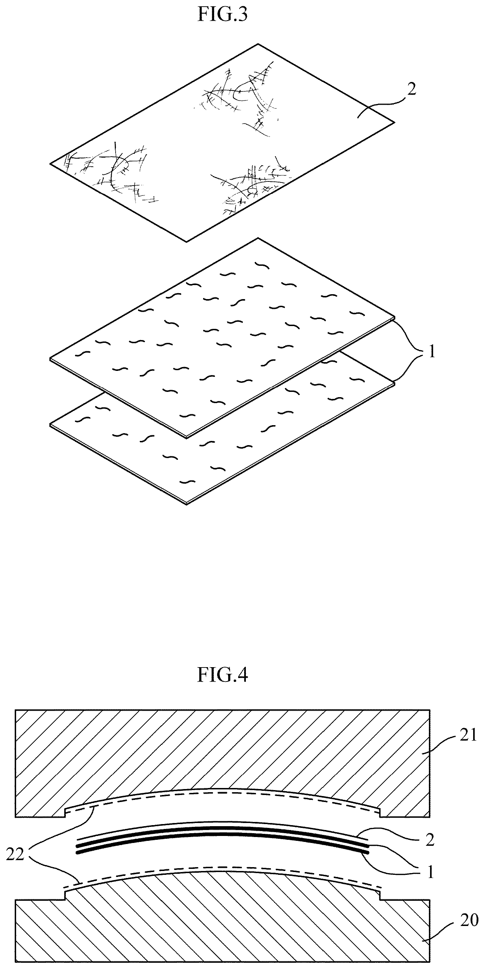

As shown in FIGS. 3 and 4, the prepared glass paper prepreg 2 and carbon-fiber-containing SMC 1 are laminated such that one sheet of the glass paper prepreg 2 described above is laminated onto an article obtained by laminating two sheets of carbon-fiber-containing SMC 1 (lamination step), the laminated article is placed in a lower mold 20 that has a cylindrical protruding curved-surface shape having a width of 1000 mm and a length of 1500 mm, an upper mold 21 that has a cylindrical recessed curved-surface shape corresponding to the shape of the lower mold 20 is fitted onto the lower mold 20, the laminated article is heated and compressed at a temperature of 150°C and a pressure of 10 MPa, the application of heating and pressure is maintained for 5 minutes, water serving as a coolant is then passed through the mold to cool the laminated article to 50°C in 5 minutes, and the molds are opened 10 minutes after the heating and compression, whereby a SMC-CFRP molded product (automotive structural material) can be obtained via press molding (curing step). In the drawings, reference symbol 22 indicates a release agent.

The surface of the resulting SMC-CFRP molded product near the glass paper prepreg is a smooth surface having no recesses characteristic of the SMC. The molded product defines a cylindrical shape having a thickness of 2.85-2.95 mm (at this point in the process, the glass paper prepreg 2 and the carbon-fiber-containing SMC 1 are both cured).

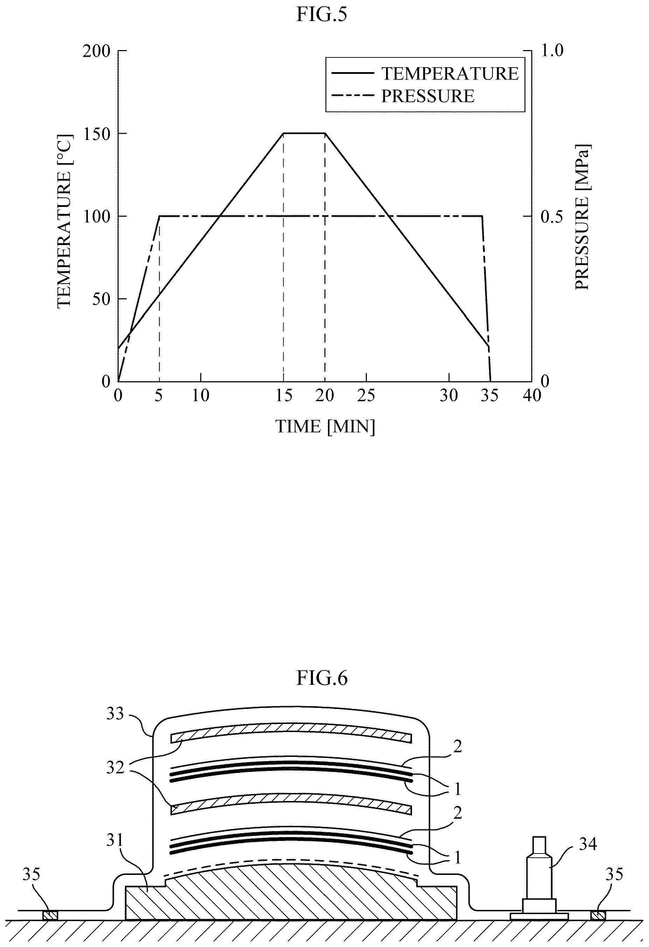

The cylindrical SMC-CFRP molded product is not limited to being press molded as described above, and can be manufactured using other molding methods, such as autoclave molding. A temperature program, a pressure program, and a vacuum program for the autoclave molding are established, as appropriate, according to the curing characteristics of the SMC and the prepreg used in the molding. For example, a program such as that shown in FIG. 5 is used. In the temperature program, the temperature is raised from a normal temperature of 20°C to 150°C at a rate of 6.5°C per minute, kept at 150°C for 5 minutes, and then lowered to normal temperature at a rate of 6.5°C per minute. In the pressure program, the internal pressure of the autoclave is raised from 0 MPa to 0.5 MPa at a rate of 0.1 MPa per minute, kept at 0.5 MPa for 39 minutes, and then lowered to 0 MPa at a rate of 0.5 MPa per minute. In the vacuum program, a prescribed vacuum state is maintained from 0 minutes, at which time molding starts, to 45 minutes, at which time molding ends, the lowering of temperature and pressure having concluded. It is permissible to use an upper mold and a lower mold as molds used during autoclave molding, similarly with respect to the press molding described above; however, it is also permissible to use only a lower mold and configure the upper surface of the molded product as the surface of a bagging film used in a vacuum bag in the autoclave molding, or to use only an upper mold and configure the lower surface of the molded product as the surface of the bagging film used in a vacuum bag in the autoclave molding. The particular surface to be in contact with the mold and the particular surface to be configured as the bagging film surface can be established, as appropriate, in accordance with the external appearance desired for the SMC-CFRP molded product.

FIG. 6 is a schematic cross-sectional view showing one example of autoclave molding in which only a lower mold 31 is used and the upper surface of the molded product is configured as the surface of the bagging film used in a vacuum bag in the autoclave molding. A laminated article obtained by laminating the two sheets of carbon-fiber-containing SMC 1 on the lower mold 31 and then laminating one sheet of the glass paper prepreg 1 on the carbon-fiber-containing SMCs 1 is placed in the lower mold 31, which has a cylindrical curved-surface shape having a width of 1000 mm and a length of 1500 mm, and a spacer mold 32 is disposed on the laminated article. Laminated articles and spacer molds 32 are furthermore repeatedly placed on each other such that the laminated articles are similarly placed on the spacer molds 32 and the spacer molds 32 are arranged on the laminated articles, and the resulting assembly is covered with a bagging film 33 used in a vacuum bag and subjected to autoclave molding. Thus, a plurality of SMC-CFRP molded products are obtained in one instance of molding and the cost of molding can be reduced. In the drawings, reference symbol 34 indicates a vacuum exhaust device, and reference symbol 35 indicates sealant tape.

In the press molding described above, it is desirable for the resin content of the glass paper prepreg 2 to be 80-95 wt% and for the resin flow to be 50-80% in order for the surface of the SMC-CFRP molded product near the glass paper prepreg to be configured as a smooth surface having no recesses characteristic of the SMC. If the resin content is less than 80 wt%, then the absolute amount of resin covering the entire glass paper will be insufficient and crater-form recesses could remain in the glass paper prepreg 2 layer after curing. Even when the resin content is high (e.g., if the resin content is 90 wt%), if the resin flow is equal to or less than 50%, then the resin will not be diffused through the entirety of the glass paper prepreg 2 layer and very small recesses that can be discerned with the naked eye or via touch will be found. Conversely, if the resin flow exceeds 80%, the resin in the glass paper prepreg 2 will excessively flow out during press molding and it will be impossible to produce a satisfactory surface state having no recesses.

When a cross-section of the SMC-CFRP molded product was observed using a microscope, the carbon-fiber-containing SMC 1 layer (base layer 3) and the glass paper prepreg 2 layer (protective layer 4) are integrated and satisfactorily bonded. In the case of a glass paper prepreg 2 in which glass paper having a unit basis weight of 50 g/m² was used, the base layer 3 produced using the carbon-fiber-containing SMC 1 had a thickness of 2.7-2.8 mm, and the protective layer 4 produced using the glass paper prepreg 2 had a thickness of 0.18-0.20 mm.

In the case of a glass paper prepreg 2 in which glass paper having a unit basis weight of 100 g/m² was used, the base layer 3 produced using the carbon-fiber-containing SMC 1 had a thickness of 2.7-2.8 mm, and the protective layer 4 produced using the glass paper prepreg 2 had a thickness of 0.40-0.42 mm.

The present example illustrates a case where the glass paper prepreg 2 is employed as the protective layer 4. However, it is also permissible to use a glass cloth prepreg having a unit basis weight of 110 g/m² or 214 g/m². The glass cloth prepreg can be manufactured using the aforedescribed vertical coater, similarly with respect to the glass paper prepreg 2. It is preferable to use the dipping method as the method for impregnating glass cloth with resin, similarly with respect to the glass paper. The tensile strength of the glass cloth is 150 N/15 mm or higher in the length direction and 120 N/15 mm or higher in the width direction, even at a unit basis weight of 110 g/m². Therefore, the glass cloth will not get torn in the length direction or the width direction due to forward tension or backward tension, as was the case in coating the glass paper prepreg.

### <Background>

The background to the aforementioned configuration and manufacturing method shall be described in greater detail here.

### • SMC

SMCs are semi-cured-state materials in which resin and fiber used in FRP molding are mixed. SMCs differ from unidirectional prepregs and cloth prepregs, in which continuous glass or carbon fiber or a fabric produced using the continuous fiber is used as a substrate and an epoxy resin is caused to assume a semi-cured state, in that, very often, a viscous resin paste (resin compound) of an unsaturated polyester resin or a vinyl ester resin is used rather than an epoxy resin.

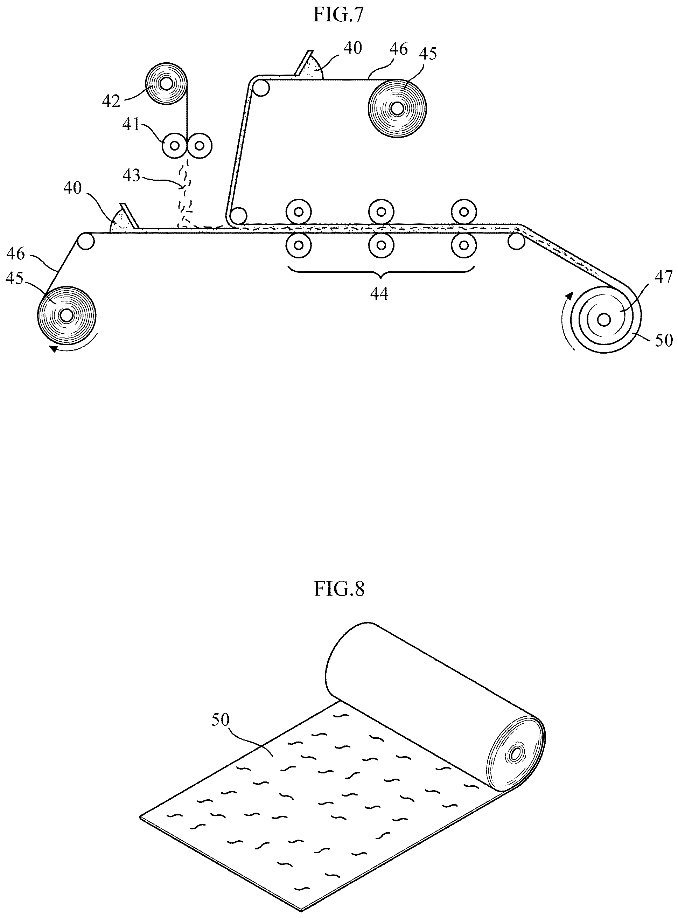

SMCs are manufactured using a manufacturing device such as that shown in, e.g., FIG. 7. Specifically, SMCs are manufactured by: applying individual resin compounds 40 to a carrier film 46 fed out from a feeding part 45 to form the resin compounds 40 into sheets; randomly dropping, onto the resin compounds 40, staple fiber 43 obtained by cutting continuous fiber 42 to a length of 1/2 inch (12.5 mm) to 2 inches (50 mm) using a roving cutter 41; and impregnating the staple fiber 43 with the resin while pressing the staple fiber 43 into the resin compounds 40 via application of pressure from an impregnation roll 44. Semi-cured-state SMCs 50 are sequentially wound by a winding part 47. An SMC product in the form of a wound roll (semi-cured-state SMC 50) is shown in FIG. 8.

The semi-cured-state SMCs 50 produced as described above are pressurized under heating via press molding in a subsequent step, and FRP molded products having a desired form are obtained.

The features of the SMCs include a short curing time and low anisotropy, which are characteristic of FRPs (e.g., high strength and elasticity in a length direction, and low strength and elasticity in a width direction). A prepreg involving the use of a polymerization reaction of an epoxy resin is cured by being heated at 130-150°C for 1-2 hours, but a SMC involving the use of a radical reaction of an unsaturated polyester resin or a vinyl ester resin can be cured by being heated at 130-150°C for 3-10 minutes. SMCs produced using glass fiber (SMC-GFRPs) are used in, *inter alia,* bathtubs for household modular baths. Additionally, SMCs are used as members for automobiles (including motorcycles), bicycles, and other mobility vehicles (movement means). Because it is possible, with SMCs, to achieve minute-unit cycle times (work times) to which apply sensory-related criteria similar to those encountered in, *inter alia,* the molding of automotive pressed metal sheets, SMCs present an advantage in that production volume is increased per unit time, thereby minimizing the cost of a molding process.

However, although the molding cycle time of SMCs can be reduced, there will be no continuity in the fiber because the continuous fiber is cut to a length of 1/2 inch (12.5 mm) to 2 inches (50 mm). Therefore, mechanical characteristics similar to those of continuous fiber cannot be obtained. Many FRPs (FRPs produced using unidirectional fiber, FRPs produced using fabric, etc.) serve as materials having high strength and high elasticity due to the fiber being continuously linked, but high strength and high elasticity are not obtained in SMCs.

Physical property values for, e.g., SMCs (SMC-GFRPs) produced using glass fiber (cut fiber) and unidirectional GFRPs produced using glass fiber (continuous fiber) are shown in table 1.

**Table 1**

| Physical property values | SMC-GFRPs (cut fiber) | Unidirectional GFRPs (continuous fiber) |
|---|---|---|
| Tensile strength [MPa] | 90-110 | 800-900 |
| Bending strength [MPa] | 180-200 | 1000-1100 |
| Bending elasticity [GPa] | 10-13 | 30-35 |

The SMC-GFRPs have poorer mechanical characteristics than the unidirectional GFRPs produced using continuous fiber; the SMC-GFRPs have about 1/10 the tensile strength of the unidirectional GFRPs, about 1/5 the bending strength thereof, and about 1/3 the bending elasticity thereof. The same tendency was also observed in SMC-CFRPs produced using carbon fiber. In cases where SMCs are used as structural materials, when the load resistance and rigidity are to be increased, it is necessary to consider, for both SMC-GFRPs produced using glass fiber and SMC-CFRPs produced using carbon fiber, curing via press molding once a plurality of semi-cured-state SMCs are laminated, as well as increasing the thickness of the molded product to obtain the necessary rigidity and load resistance.

When the thickness of the molded product is increased, a difference in the density of the basis weight of the fiber will increase according to the location of the molded product, and recesses and protrusions on the surface of the molded product will tend to increase in size. In cases where protection tape is affixed, the workload involved in a step for eliminating recesses and protrusions on the surface of the SMC molded product will increase. Additionally, in cases where painting is carried out, a step (unevenness adjustment step) for filling the recesses with putty to produce a smooth foundation will also be required in addition to the step for eliminating recesses and protrusions, and the workload will increase further.

Because cut fibers are used in SMCs, there is no continuity in the fibers. Additionally, those fibers in the SMCs having a length of 1 inch bend over or become generally linear and are distributed within 1 m², and the directions of such fibers are randomly distributed within a given area (e.g., 1 m²). Thus, due to the fibers being randomly oriented, the SMCs, uniquely among FRPs, are known as materials that are generally isotropic. Specifically, SMC-FRPs are materials that substantially exhibit no anisotropy in terms of the strength and elasticity in the length direction being high and the strength and elasticity in a direction orthogonal to the length direction being low, as is the case with unidirectional FRPs, and instead are generally isotropic, similarly to steel.

Isotropy refers to a property of a material whereby when, for example, the material is in the form of a plate, the bending and tensile strength and elasticity of the material in width, length, and oblique directions exhibit roughly the same values. In FRPs, pseudo-isotropy indicates a laminated article in which continuous fiber is used and the orientation of the fiber is 0°, 90°, or ±45°. The state of isotropy in SMCs differs from this pseudo-isotropic state and is thus expressed as being generally isotropic.

Due to being generally isotropic as described above, SMCs are preferred by designers in the automotive industry, in which steel has been used for many years, from the standpoint of making it possible to design materials with the same sensory-related criteria as steel. Additionally, because SMCs can be press molded in 3-10 minutes and thus approach the takt time (work time) for press molding of metals, SMCs have been used as interior linings for several types of vehicles in recent years. For example, carbon-fiber-containing SMCs (SMC-CFRPs) have been used for the rear doors of the Prius PHV and the door interiors of the Lexus LC500 for the purpose of reducing weight. At present, SMC-CFRPs are used mainly as interior linings and are combined with steel or aluminum in exterior materials.

Typical fibers used in SMCs include glass fiber and carbon fiber. Glass fiber has electrical insulation properties, but carbon fiber does not have electrical insulation properties, instead having properties that allow transmission of electricity (is electroconductive). Cut fibers are used in carbon-fiber-containing SMCs (SMC-CFRPs), but there can be portions where one cut fiber is in contact with other cut fibers, and electroconductivity arises due to the creation of electrical paths (percolation).

In cases where steel or aluminum is in contact with SMC-CFRPs, and if water droplets of condensation or the like collect at the site of contact, then a galvanic current could flow. In this case, with the water droplets acting as an electrolyte aqueous solution, the SMC-CFRP serves as a positive electrode, and the steel or aluminum serves as a negative electrode, and electrolytic corrosion could advance.

In FRPs (CFRPs) produced using carbon fiber, the fact that carbon fiber is electroconductive means that, if sites where steel or aluminum is in contact with (joined to) the CFRPs become wetted with rain or dew, then a very low current will flow, with the water droplets of rain, dew, condensation, or the like acting as an electrolyte aqueous solution, the CFRP serving as a positive electrode, and the steel or aluminum serving as a negative electrode. This occurs due to a difference in electric potential from the carbon, said difference arising due to the tendency for steel and aluminum to be ionized. Such a current is referred to as a galvanic current.

In voltaic cells in which copper serves as a positive electrode and zinc serves as a negative electrode, the zinc, which is readily ionized, gradually corrodes. Similarly to how corrosion of the zinc advances, at portions where, for example, the exterior-side steel or aluminum is in contact with the interior-side SMC-CFRPs, the steel or aluminum corrodes in the same manner as the zinc in the voltaic cell. This corrosion is referred to as "electrolytic corrosion." In cases where falling rain is slightly acidic, or where a vehicle is parked near the sea when rain is falling, the water serves as an electrolyte aqueous solution containing a slightly hydrochloric acid component, whereby iron ions from a steel member or aluminum ions from an aluminum member are readily released, and thus the steel or aluminum experiences further corrosion (electrolytic corrosion).

Therefore, surfaces where steel or aluminum is in contact with SMC-CFRPs must be electrically insulated. Affixing protection tape to the CFRP surface can make it possible to achieve electrical insulation; however, as described above, affixing protection tape necessitates adjustment of unevenness in the CFRP surface. Additionally, the protection tape could eventually peel away, and if the protection tape peels away, then corrosion (electrolytic corrosion) will occur on the metal-member side, among the surfaces where the metal member and the CFRP are in contact. If there are sites where the protection tape has peeled away and sites where the protection tape has not peeled away at the surfaces of the metal member and the CFRP member that are in contact, then dew (water droplets) could collect at these sites, and the possibility that corrosion (electrolytic corrosion) could occur on the metal side will increase.

A method for painting the CFRP to produce a protective layer is proposed as a measure against chipping and electrolytic corrosion. A SMC-CFRP is used as an example to illustrate a molding step and a painting step in said method.

The SMC-CFRP is manufactured in the same manner as described above using the manufacturing device shown in FIG. 7. Specifically, the SMC-CFRP is manufactured by: forming a viscous resin paste (resin compound) of an unsaturated polyester resin or a vinyl ester resin into a sheet; randomly dropping, onto the resin compound, staple carbon fiber obtained by cutting continuous carbon fiber to a length of 1/2 inch (12.5 mm) to 2 inches (50 mm); and impregnating the fiber with the resin while pressing the fiber into the resin compound using a pressing roll (impregnation roll). Painting of the SMC-CFRP is carried out in a separate step on the surface of the molded product after the semi-cured-state SMC-CFRP is inserted into a mold and press molded via pressurization under heating.

SMCs vary greatly in terms of the basis weight of the resins due to partial portions of a given area. For example, in the case of a carbon-fiber-containing SMC in which the resin compound is adjusted to 1000 g/m², the cut carbon fiber is adjusted to 1000 g/m², and the total basis weight of the resin compound and the fiber is 2000 g/m² (i.e., a carbon-fiber-containing SMC having a carbon fiber content by weight of 50 wt% and a resin content by weight of 50 wt%), fiber basis weight variations of ±5-15% arise depending on the fiber distribution such that the range for a given area measuring 50 mm × 50 mm within 1 square meter is 2300 g/m² and the range for another given area measuring 50 mm × 50 mm is 1700 g/m².

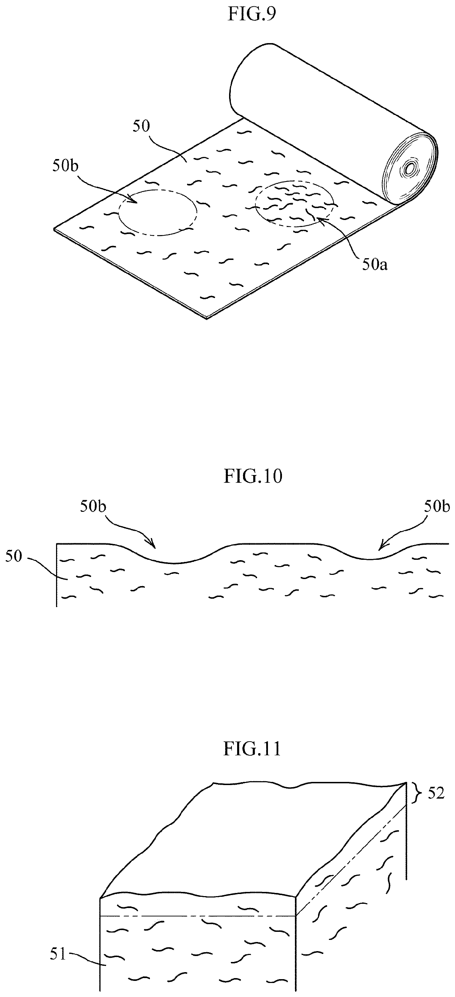

Specifically, as shown in FIG. 9, the fibers are dense in an area 50a at 2300 g/m² in the SMC product (semi-cured-state SMC 50), and are sparse in an area 50b at 1700 g/m². When such a SMC is press molded, the thickness of the molded product tends to be greater in the portion where the fibers are dense (portion where the resin content is relatively low; area 50a), and lower in the portion where the fibers are sparse (portion where the resin content is relatively high; area 50b) (see FIG. 10). For example, when the SMC is press molded into the form of a flat plate, an area measuring 100 mm × 100 mm in a given portion will have the desired thickness, but an area measuring 100 mm × 100 mm in another given portion will be slightly thinner than the desired thickness, even among areas on the same flat surface of the molded product.

The difference in thickness originating from the basis weight variation appears as a difference in the height of the surface of the SMC press-molded product, the difference between high locations and low locations on the surface of the SMC molded product being 50-60 µm, or even 70-80 µm in cases where recesses are deep. In cases where the storage life of the SMC is advanced (e.g., cases where the SMC is stored for more than three weeks from the date of manufacture at normal temperature despite being designed as a SMC having a storage life of two weeks from the date of manufacture at normal temperature), the difference between high locations and low locations on the surface of the SMC press-molded article can reach 80 µm or higher due to the SMC resin not readily flowing, in addition to the factors in SMC basic weight variation.

For both SMC-GFRPs produced using glass fiber and carbon-fiber-containing SMC-CFRPs, a molded product of desired shape is obtained via press molding using a mold. During the press molding, the viscous resin paste (resin compound) and the fiber cut to 1/2 inch (12.5 mm) to 2 inches (50 mm) are processed into a desired shape and molded at a very high pressure of 2-10 MPa (20-100 kg/cm²) so that the resin and the fiber extend into the corners of the mold. Due to high pressure being applied in press molding, the molded product clings to the mold, and considerable time is required in separating the molded product from the mold. In order to facilitate releasing the product from the mold during such separation from the mold (to prevent the molding cycle time from extending and prevent any reduction in production volume), a release agent is applied to an upper mold and a lower mold of the mold for each instance of molding. The molded product, after being heated at 130-150°C for 3-10 minutes, can be smoothly separated from the mold without being broken or damaged (see FIG. 4).

Thermosetting resins used in manufacturing CFRPs produced using carbon fiber and GFRPs produced using glass fiber, including the unsaturated polyester resins and the vinyl ester resins used for the SMCs, can form inactive layers (layers that repel adhesive agents or paints) measuring 10-30 µm on the surfaces of the FRP molded products upon being heated, the inactive layers being unsuitable for adhesion to or painting onto other materials.

In particular, in the case of SMCs, the release agent applied to the mold transfers to the surface of the SMC molded product during press molding using the mainly used molding method; therefore, the inactive layer on the surface of the FRP molded product is even more unsuitable for adhesion to or painting onto other materials. The action of the release agent is to improve properties for release from the mold, and the release agent can also slightly transfer to the surface of the SMC molded article, thereby improving release properties. For example, an inactive layer can form on the surface of even an FRP for which no release agent is used, as is the case with a filament-wound (FW) molded product, but in the case of SMC molding, the release agent slightly transfers to the inactive layer, whereby the inactive layer becomes even more unsuitable for bonding to, adhesion to, or painting onto other materials.

In actual practice, when the surface of the molded SMC is sprayed with water, the water is repelled in the form of water droplets. Additionally, cellophane tape also cannot be affixed to the surface of the pressed SMC, and the inactive surface layer, which prevents other materials from approaching, is formed to a greater extent as more peeling occurs.

The inactive layer serves as an obstacle in painting for the purpose of employing a measure against chipping or a measure against electrolytic conversion, affixing of protection tape, processing of a design (design painting or finishing coat painting), and bonding of the SMC and another material via an adhesive agent (i.e., the inactive layer prevents the paint or adhesive agent from satisfactorily bonding to the surface of the FRP molded product). Therefore, in cases where the surface of the SMC is to be painted after molding (cured resin) or where another material is to be affixed or bonded to said surface, it is necessary to remove the inactive layer via a surface cutting process such as sanding or sandblasting. An overview of a molded (cured) SMC 51 and an inactive layer 52 is shown in FIG. 11.

When the surface of the SMC molded product is to be painted in order to improve the measure against chipping or the measure against electrolytic corrosion, or to achieve an aesthetically pleasing appearance, it is necessary to cause protrusions among recesses and protrusions produced in the press molding to match the recesses, together with the inactive layer on the surface, and to implement a surface cutting process (unevenness adjustment) such as sanding or sandblasting on the surface of the SMC molded product until any difference in height is eliminated, in order for the paint to be satisfactorily bonded to the surface of the SMC molded product. The SMC-CFRP molded product of the present example, similarly to SMC-GFRP molded products produced using glass fiber, must be subjected to the surface cutting process at portions other than those where the molded product surface is low (recesses) until the entire surface matches the recesses, for the purpose of painting or of bonding or affixing another material.

However, in cases where the recesses are deep (e.g., about 80 µm), if the surface of a FRP molded product is subjected to a surface cutting process such as sanding or sandblasting until the recesses are eliminated in order to obtain a satisfactory foundation for painting, then fiber located near the surface could be cut and the strength and elasticity of the SMC-CFRP molded product could be reduced. Portions where the fiber is cut become weak in a localized manner; for example, if a SMC-CFRP molded product is subjected to some type of impact at a depth of 1 mm or lower, then the molded product will break in the same manner as a paper sliding door being broken by a fist.

Additionally, if the surface cutting process such as sanding or sandblasting is stopped at a level at which the fiber in the SMC-CFRP molded product is not broken, then recesses could remain in the surface of the SMC-CFRP molded product; therefore, the recesses must be removed in order to, e.g., satisfactorily paint the surface of the SMC-CFRP molded body or affix protection tape thereto.

Accordingly, in the prior art, before the surface of the SMC-CFRP molded product is painted or affixed with protection tape, but after the surface of the SMC-CFRP molded product is subjected to a surface cutting process such as sanding or sandblasting and then a degreasing treatment within a range in which the fiber in the surface is not cut, the recesses will be filled with a polyester-resin-based putty agent, and the sites filled with the putty agent will again be subjected to the surface cutting process, whereby unevenness adjustment for smoothing the surface of the SMC-CFRP molded product will be carried out. A design is imparted to the surface of the SMC-CFRP molded product after the unevenness adjustment.

### • Painting

Next, a specific description shall be given in regard to painting performed in the prior art as a measure against chipping and electrolytic corrosion, steps including molding a SMC-CFRP having a cylindrical shape (semicylindrical shape) in which a portion of a round columnar body having a width of 1000 mm and a length of 1500 mm is cut away, producing a foundation (adjusting unevenness) in cases where the surface of the molded product is to be painted, and finishing the painting.

First, a carbon-fiber-containing SMC (semi-cured-state article before curing) that is cut into rectangles having a width of 1000 mm and a length of 1500 mm is prepared.

The carbon-fiber-containing SMC is such that the resin compound is adjusted to 1000 g/m², the cut carbon fiber is adjusted to 1000 g/m², and the total basis weight of the resin compound and the fiber is 2000 g/m² (i.e., the carbon-fiber-containing SMC has a carbon fiber content by weight of 50 wt% and a resin content by weight of 50 wt%). A vinyl ester resin (or unsaturated polyester resin) that has characteristics such that the resin is cured by being heated at 150°C for 5 minutes is employed as the resin compound.

Two such carbon-fiber-containing SMCs are laminated and placed in a cylindrical lower mold, an upper mold is fitted onto the lower mold, the laminated article is heated and compressed (hot pressed) at a temperature of 150°C and a pressure of 10 MPa, the application of heating and pressure is maintained for 5 minutes, water serving as a coolant is then passed through the mold to cool the laminated article to 50°C in 5 minutes, and the molds are opened ten minutes after the heating and compression to obtain a SMC-CFRP molded product.

Depending on any deviation in the basis weight of the carbon fiber, e.g., depending on any deviation in the basis weight of the carbon fiber with which the area range of a given portion within 1 square meter is 2300 g/m² and the area range of another given portion is 1700 g/m² in the case of a carbon-fiber-containing SMC for which the total basis weight of the resin compound and the fiber is 2000 g/m² (i.e., for which the carbon fiber content by weight is 50 wt% and the resin content by weight is 50 wt%), defects in the form of recesses and protrusions can appear on the surface of the SMC-CFRP molded product such that the molded product will be thicker in portions where the fibers are dense and thinner in portions where the fibers are sparse.

As an example of another defect, there are cases where the resin flow (flow of resin) during press molding is insufficient due to a storage state even if the storage life of the semi-cured-state carbon-fiber-containing SMC is within an effective period before curing in the press molding. While there are portions where the surface of the upper mold sufficiently contacts the carbon-fiber-containing SMC during press molding and a desired thickness is exhibited, recesses can be formed in the surface of the molded product due to the resin flow being insufficient and the surface of the upper mold not sufficiently contacting the carbon-fiber-containing SMC, resulting in the desired thickness not being exhibited.

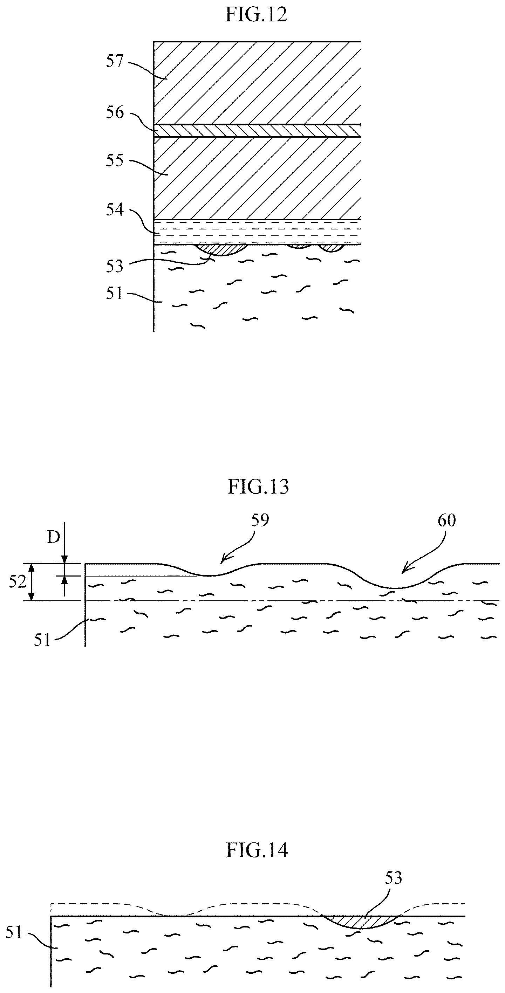

In cases where a satisfactory painting layer is formed on the surface of the SMC-CFRP molded body for the purpose of a measure against chipping or a measure against electrolytic corrosion, it is necessary to carry out steps such as those described below. FIG. 12 shows a cross-sectional diagram of a SMC provided with a prior-art painting layer. In the drawings, reference symbol 53 indicates a putty-filled part, reference symbol 54 indicates an undercoat layer, reference symbol 55 indicates an intermediate coat layer, reference symbol 56 indicates a design painting layer, and reference symbol 57 indicates a finishing coat layer. In cases involving the use of a SMC-CFRP molded product in which recesses are present on the surface of the molded product as described above, an excessive workload will be required for steps 1 and 2 below in particular.

Step 1: As shown in FIG. 13, the surface of the SMC-CFRP molded product is subjected to a surface cutting process (sanding or sandblasting) at a depth D at which the fibers are not cut, and then to a degreasing treatment. At this point, shallow recesses 59 are eliminated, but deep recesses 60 remain (see FIG. 14).

Step 2: Recesses that remain in the surface of the SMC-CFRP molded product even after the surface cutting process (some of the deep recesses 60) are filled with a putty agent, e.g., a black polyester-resin-based putty agent (see FIG. 14; reference symbol 53 indicates the putty-filled part). The putty agent is cured under curing conditions (temperature and time) that are recommended for the putty agent used. For example, the putty agent is exposed to warm blasts of air at 40-60°C for 3-6 hours, or is cured at normal temperature over 1 day. Protrusions on the surface of the SMC-CFRP molded product after curing are subjected to unevenness adjustment, such as being sanded using #240 sandpaper, so that a final smooth surface having no protruding portions thereon is formed on a surface where a design is to be painted. In step 2, in cases where the putty agent is to be cured or a paint is to be dried and cured, for example, the drying and curing times can be shortened if the temperature is set to 80°C or higher. However, because microcracking of the putty agent or paint and peeling form the surface of the SMC-CFRP molded product occur under these conditions, it is desirable for the putty agent to be cured or for the paint to be dried and cured at a low temperature, e.g., 60°C or lower. When the temperature is reduced, the drying and curing times increase.

Step 3: A clear paint for forming an undercoat layer is applied to the surface of the SMC-CFRP molded product after the unevenness adjustment at a thickness of 25-30 µm by using a spray gun, and, for example, the paint is dried and cured by being held at 40°C for 1/2 day to 1 day.

The undercoat layer is formed at a thickness of 25-30 µm in order to have adhesion with a base for the surface of the SMC-CFRP molded product after unevenness adjustment and resistance to corrosion by alkalis and acids on the surface of the SMC-CFRP molded product. Moreover, adhesiveness with respect to an intermediate coat layer, which shall be described later, is also achieved.

Step 4: A clear paint for forming the intermediate coat layer is applied to the surface of the undercoat layer at a thickness of 40-45 µm by using a spray gun, and, for example, the paint is dried and cured by being held at 40°C for 1/2 day to 1 day.

The intermediate coat layer is formed at a thickness of 40-45 µm in order to maintain the smoothness of the undercoat layer and achieve impact resistance for the entire painting surface. Moreover, adhesiveness with respect to a finishing coat layer, which shall be described later, is also achieved. In cases where a design is to be painted (or where a design is to be printed), this process is implemented on the intermediate coat layer. Another purpose of the intermediate coat layer is to form a smooth foundation in order to paint or print a design.

Step 5: In cases where pearlescent painting is to be carried out as design painting, or where the painting surface is to be colored, a pearlescent painting or coloring layer is formed on the surface of the intermediate coat layer, after the intermediate coat layer is formed, at a thickness of 15-20 µm. The design painting layer (design layer), similarly to the other layers, is dried and cured by being held at 40°C for 1/2 day to 1 day.

There are also cases where, in addition to the design painting, for example, a brand name or design is silk-screen printed, or a sticker is affixed to impart a design.

Step 6: A clear paint for forming the finishing coat layer is applied to the surface of the design layer at a thickness of 40-45 µm by using a spray gun, and, for example, the paint is dried and cured by being held at 40°C for 1/2 day to 1 day.

In cases where the state directly following molding of the surface of the SMC-CFRP molded product (state of a marbled pattern produced due to the density of the carbon fibers associated with the flow of the resin) is to be transparently differentiated on the surface for the purpose of enhancing design properties, the paints used in undercoating, intermediate coating, and finishing coating may be made transparent. In this case, the design painting step in step 5 is omitted.

Additionally, in the case of a CFRP molded product produced using carbon cloth (carbon-fiber fabric), in addition to the carbon-fiber-containing SMC molded product (SMC-CFRP), the paints used in undercoating, intermediate coating, and finishing coating may be made transparent similarly with respect to a case where the texture of carbon cloth is to be transparently differentiated on the surface for the purpose of enhancing design properties. In such instances as well, the design painting step in step 5 is omitted.

Step 7: Furthermore, as necessary, a clear paint for forming a second finishing coat layer is applied to the surface of the finishing coat layer at a thickness of 40-45 µm by using a spray gun, and, for example, the paint is dried and cured by being held at 40°C for 1/2 day to 1 day.

The finishing coat layer is referred to as a top coat painting. The finishing coat layer is formed at a thickness of 40-90 µm for the purpose of maintaining luster and achieving an aesthetically pleasing appearance, scratch resistance, weather resistance, and contamination resistance, in addition to serving as a measure against chipping and electrolytic corrosion.

Steps 1-7 above are described as luster-associated surface painting steps used on a vehicle body or the like. However, there is also a separate painting method referred to as "chipping painting" that is specialized as a measure against chipping. Chipping painting, or "thick painting," involves forming a coating film after the intermediate coat layer in step 4 is formed (or after the undercoat layer in step 3 is formed), the coating film having a thickness of 100 µm or greater. Chipping painting does not include the finishing coat layer in step 6 or 7, and the resulting painting surface is rough and opaque.

When small stones have hit a coating film produced through chipping painting, the force of the impact is dispersed to the coating film due to the rough surface, yielding a measure against chipping. The surface painting carried out through steps 1-7 above also serves as a measure against chipping, but when small stones hit the coating film thereof, cracks in the coating film extend in a spiderweb form as though the glass had been hit by a bullet. Chipping painting is a painting method with which it is possible to anticipate an effect for preventing cracks from extending in a spiderweb form upon impact by small stones. Chipping painting is used on the undersides (sides close to the ground), bumpers, and grilles of vehicle bodies.

The painting surface of chipping-painted portions is rough and lumpy, and therefore a disadvantage is presented in that dirt and dust readily collect thereon. Additionally, because no clear painting or finishing coating for protecting the painting surface against ultraviolet rays or the painting surface itself is performed, a disadvantage is presented in that damage from ultraviolet rays and dirt directly accumulate on the chipping-painted surface. In particular, ultraviolet rays have an action for degrading the coating film, and therefore there is a concern that the coating film will be destroyed when small stones hit the painting surface. If the painting surface is destroyed, then the carbon fiber in the SMC-CFRP molded product will be exposed, and the action of the coating as a measure against chipping and electrolytic conversion will be compromised.

Additionally, with chipping painting, the painting could peel even by washing the vehicle. Therefore, when washing the vehicle, it is necessary to manually wash the vehicle using a large amount of water rather than washing the vehicle using a carwash.

Surface painting carried out through the aforedescribed steps 1-7, or chipping painting specialized as a measure against chipping as described above, is implemented on the SMC-CFRP molded product. There is a demand to simplify the aforedescribed painting work, in which incorporating painting as a measure against chipping and electrolytic corrosion or even painting for imparting a design increases the number of steps and the workload and lengthens the processing time by several days.

In automobiles, two-wheeled vehicles, and other mobility vehicles (movement means), chipping occurs in which the CFRP surface is scratched due to small stones being thrown up during travel or in which the CFRP member is partially fragmented. Such chipping results in scratches on the FRP fiber, and it is necessary to prevent damage from extending further. In addition to painting, the aforedescribed methods for affixing the protection tape or the like (in addition to protection tape, there are also decorative films in which an adhesive agent is attached to one surface of the SMC-CFRP) exist as measures against chipping, but the protection tape may not conform to a three-dimensional shape, and "lifting" can appear in portions of the protection tape. Particularly in the case of SMC-CFRP or SMC-GFRP molded products, an inactive layer associated with transfer of the release agent during press molding can form on the molded product surface, and therefore the protection tape cannot be bonded. For the purpose of bonding, similarly with respect to the painting described above, it is necessary to remove the inactive layer via a surface cutting process such as sanding or sandblasting (see FIGS. 13 and 14).

Thus, measures for painting or for affixing protection tape are taken in order to prevent chipping of CFRP members in automobiles and other mobility vehicles, but even with painting or protection tape, it is necessary to carry out a foundation treatment performed using a surface cutting process such as sanding or sandblasting. There is a demand to simplify these steps.

As a result of thoroughgoing investigations focused on the troublesome nature of the surface treatment described above, the inventors discovered: the configuration of an automotive structural material pertaining to the present example, which enables measures against chipping and measures against electrolytic corrosion without using protection tape or painting and also obviates having to adjust unevenness; and a method for manufacturing the automotive structural material.

### <Effect>

Due to being configured as described above, the present example yields an exceptional automotive structural material that makes it possible to prevent chipping and electrolytic corrosion without using protection tape, also obviates having to adjust unevenness for the purpose of painting, and moreover can be manufactured in a short time, particularly an automotive structural material that can suitably be used as an interior lining.

Experimental examples supporting the effect of the present example shall be described below.

### <Experimental example 1>

A crosscutting test was carried out in order for the adhesion properties (bonding properties) of the protective layer and the base layer in the present example to be compared with the adhesion properties in cases where painting is used and cases where protection tape is used. Specifically, the adhesion properties were essentially compared in the case of a crosscutting test involving a coating film thickness of 121-250 µm (0.121-0.250 mm) performed in conformance with JIS K5600.

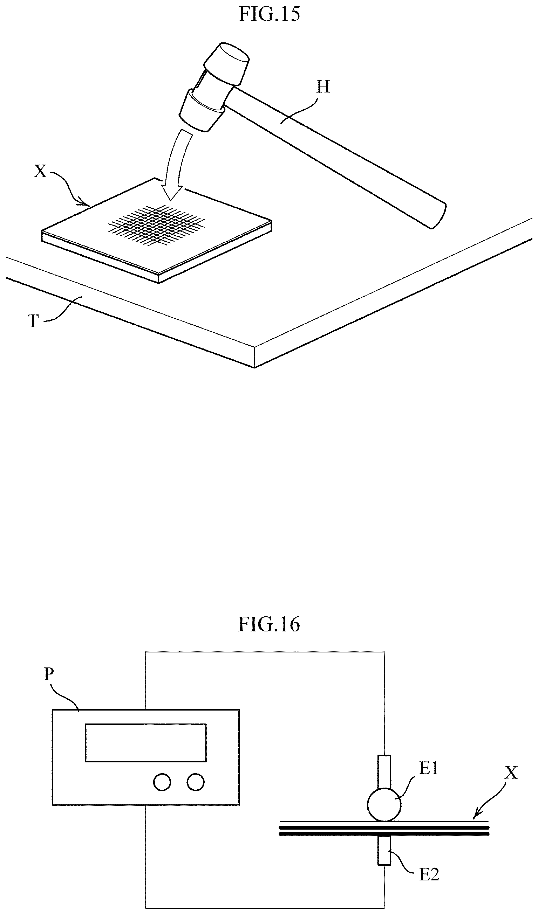

A comparison was also made for a case in which, as shown in FIG. 15, a test piece X having grid-form notches therein was subjected to impact by bringing the hammer handle of a plastic hammer H (made by O.H. Industrial; Soft Hammer FP Part II; total length: 300 mm; weight: 340 g; head diameter: 23 mm) into contact with a table T and allowing the head of the hammer to fall under gravity from a height of 200 mm, after which a crosscutting test was carried out.

The test results are shown in table 2. The carbon-fiber-containing SMC molded products were each categorized, with test example 1-1 being a molded product provided with the aforementioned protective layer according to the present example that was composed of a glass paper prepreg including glass paper having a unit basis weight of 50 g/m², test example 1-2 being a molded product provided with the aforementioned protective layer according to the present example that was composed of a glass paper prepreg including glass paper having a unit basis weight of 100 g/m², comparative example 1-1 being a molded product on which painting was implemented as a protective layer, and comparative example 1-2 being a molded product to which protection tape was affixed as a protective layer.

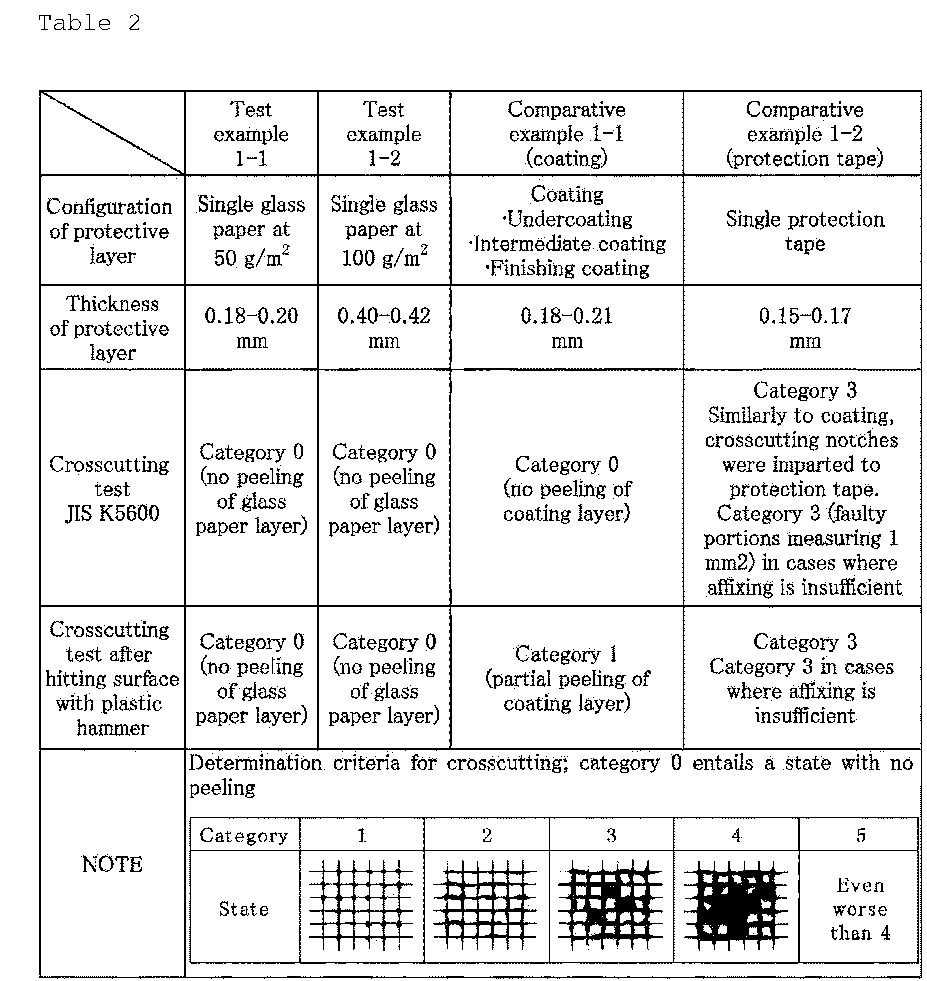

The thickness of the protective layer in test example 1-1 was 0.18-0.20 mm, and it was possible to confirm that test example 1-1 yielded a layer serving as a measure against chipping equivalent to those in comparative example 1-1 and comparative example 1-2.

The thickness of the protective layer in test example 1-2 was 0.40-0.42 mm, and it was possible to confirm that test example 1-2 yielded a layer serving as a measure against chipping having roughly double the thickness of that in comparative example 1-1.

The protective layers produced using the cured articles of the glass paper prepregs in test example 1-1 and test example 1-2 yielded a result of category 0, in which there is no peeling, both when the test was performed using ordinary crosscutting and crosscutting after impact by a hammer.

However, in the case of the painting in comparative example 1-1, the painting partially peeled in the test performed using crosscutting after impact by a hammer, and the result was category 1, in which intersection portions of the crosscut peel. Additionally, in the case of the protection tape in comparative example 1-2, the protection tape peeled at locations where affixing was insufficient in both the case of the test performed using ordinary crosscutting and the case of the test performed using crosscutting after impact by a hammer, and the result was category 3.

In test example 1-1 and test example 1-2, a molded layer produced using the glass paper prepreg (protective layer composed of a cured glass paper prepreg) was present on the surface layer of the carbon-fiber-containing SMC, and the molded layer of the glass paper prepreg exhibited a resin content of 80 wt% and a resin flow of 50%. Due to the presence of numerous resin components having high fluidity, the resin came into contact with and was molded by not only the surface of the lower mold but also the entire surface of the upper mold, therefore making it possible for molded articles having the desired shape to be obtained at a surface roughness equivalent to that of the upper mold. Accordingly, recesses that would be caused by the characteristic fiber density of SMCs being sparse did not form in the molded articles. Specifically, the recesses in the SMC surface were filled with the resin from the glass paper prepreg, and the resin layer contacted the upper mold and the lower mold, as a result of which recesses were not generated in the molded product surface (protective layer surface).

In the case of employing measures against chipping and measures against electrolytic corrosion, the surfaces will not need to be modified, but in the case of painting a design on the surface layer of the carbon-fiber-containing SMC after molding, the sanding or sandblasting in step 1 of the painting described above can be carried out to 0.15 mm (150 µm) for test example 1-1 or 0.35 mm (350 µm) for test example 1-2, irrespective of fiber cutting. Furthermore, because there are no recesses on the surface of the molded product as described above, it is possible to omit any unevenness adjustment step for filling the recesses with the putty agent in step 2 of the painting described above or partially sanding the recesses.

### <Experimental example 2>

An electrical breakdown test was carried out using the device shown in FIG. 16 in conformance with JIS K6911 in order to compare the electrolytic conversion resistance achieved using the protective layer in the present example with that in cases where nothing was laminated or affixed to the carbon-fiber-containing SMC molded product and cases where a protection tape is affixed to the surface of the carbon-fiber-containing SMC molded product. In the drawings, reference symbol P indicates a high-voltage power supply, reference symbol E1 indicates an upper electrode, reference symbol E2 indicates a lower electrode, and reference symbol X indicates a test piece.

The test results are shown in table 3. The carbon-fiber-containing SMC molded products were each categorized, with test example 2-1 being a molded product provided with a protective layer composed of a glass paper prepreg including glass paper having a unit basis weight of 25 g/m², 50 g/m², 75 g/m², 100 g/m², or 125 g/m², test example 2-2 being a molded product provided with a protective layer composed of a glass cloth prepreg including glass cloth having a unit basis weight of 110 g/m² or 214 g/m², comparative example 2-1 being a molded product to which nothing was laminated or affixed, and test example 2-2 being a molded product to which protection tape was affixed.

The glass cloth used in test example 2-2 having a fiber basis weight of 110 g/m² is commonly referred to as "1031," said glass cloth having E225 fibers as the fibers used, and being composed of 62 warp fibers/25 mm and 58 weft fibers/25 mm. The glass cloth used in test example 2-2 having a fiber basis weight of 214 g/m² is commonly referred to as "7628," said glass cloth having ECG75 fibers as the fibers used, and being composed of 44 warp fibers/25 mm and 33 weft fibers/25 mm. The glass cloth prepregs in which these glass cloths are used have a resin content of 80 wt% and a resin flow of 50%.

**Table 3**

| | | | | | | | | | |
|---|---|---|---|---|---|---|---|---|---|
| Sections | Test example 2-1 | | | | | Test example 2-2 | | Comparative example 2-1 | Comparative example 2-2 |
| | Protective layer: glass paper prepreg | | | | | Protective layer: glass cloth prepreg | | Carbon-fiber-containing SMC molded product (no lamination or affixing) | Protection tape affixed to surface of carbon-fiber-containing SMC molded product |
| Basis weight [g/m²] | 25 | 50 | 75 | 100 | 125 | 110 | 214 | | |
| Electrical breakdown voltage [kV] | 1.80 | 4.48 | 5.46 | 6.55 | 7.28 | 2.15 | 3.88 | 0.26 | 8.22 |

When the carbon-fiber-containing SMC is to be used on a surface that is in contact with metal, insulation is required on the SMC side. The electrical breakdown voltage serves as an index indicating the extent of insulation. If the SMC-side electrical breakdown voltage is 3 kV or higher, or more desirably 5 kV or higher, then electrolytic corrosion will not readily occur between the SMC and the metal.

The electrical breakdown voltage in comparative example 2-1 was 0.26 kV, and there is clearly a possibility that electrolytic corrosion could occur on the metal side.

The electrical breakdown voltage in comparative example 2-2 was 8.22 kV, which is higher than 5 kV, and the possibility that electrolytic corrosion could occur on the metal side is very low. However, in cases where protection tape is affixed to the surface of the carbon-fiber-containing SMC molded product, an inactive layer associated with transfer of the release agent to the surface of the carbon-fiber-containing SMC molded product during press molding is present, as described above. Additionally, it is necessary to carry out a step for removing the inactive layer via a surface cutting process such as sanding or sandblasting, similarly with respect to the unevenness adjustment or surface treatment for painting, in order to affix the protection tape. If inadequately fixed, the protection tape will peel during use and rain, dew, and condensation will enter through gaps where the protection tape is inadequately fixed, resulting in electrolytic corrosion. Even if the protection tape is sufficiently affixed during affixing, electrolytic corrosion will occur if the protection tape partially peels due to vibration during movement of an automobile or other mobility vehicle.

However, in test example 2-1, in the case where glass paper having a fiber basis weight of 25 g/m² was used, the electrical breakdown voltage was 1.8 kV, which is equal to or lower than 3 kV, and the possibility of electrolytic corrosion occurring was high in this case, but in the case where glass paper having a fiber basis weight of 50 g/m² was used, the electrical breakdown voltage was 4.48 V, which is equal to or higher than 3 kV, at which electrolytic corrosion does not occur, and the possibility of electrolytic corrosion occurring was very low. Therefore, in cases where a cured glass paper prepreg is used as an insulation layer (measure against electrolytic corrosion), it is desirable to use glass cloth having a fiber basis weight of 50 g/m² or higher.

Additionally, in the case where glass paper having a fiber basis weight of 75 g/m² was used, the electrical breakdown voltage was 5.46 kV, which is equal to or higher than 5 kV, at which the incidence of electrolytic corrosion is very low; therefore, the electrical breakdown voltage was at a level sufficient for a measure against electrolytic corrosion.

Furthermore, the inventors confirmed that in the case where glass paper having a fiber basis weight of 100 g/m² was used, the electrical breakdown voltage was 6.55 kV, and in the case where glass paper having a fiber basis weight of 125 g/m² was used, the electrical breakdown voltage was 7.28 kV, confirming that the electrical breakdown voltage increases as the fiber basis weight of the glass paper prepreg increases. Specifically, if a prepreg produced using glass paper having a high basis weight (i.e., thick glass paper) is used, then it will be possible to obtain a carbon-fiber-containing SMC (SMC-CFRP) molded product having a surface layer that is effective as a measure against electrolytic corrosion.

In test example 2-2, in the case where glass cloth having a fiber basis weight of 110 g/m² was used, the electrical breakdown voltage was 2.15 kV, which is equal to or lower than 3 kV, and the possibility of electrolytic corrosion occurring was high in this case, but in the case where glass cloth having a fiber basis weight of 214 g/m² was used, the electrical breakdown voltage was 3.88 kV, which is equal to or higher than 3 kV, at which electrolytic corrosion does not occur, and the possibility of electrolytic corrosion occurring was very low. Therefore, in cases where a cured glass cloth prepreg is used as an insulation layer (measure against electrolytic corrosion), it is desirable to use glass cloth having a fiber basis weight of 200 g/m² or higher.

The present example illustrates a case where a glass paper prepreg is laminated on mainly a SMC, as described above. However, even if the object on which the glass paper prepreg is laminated is not a SMC but rather a prepreg (unidirectional prepreg or cloth prepreg) composed of carbon fiber and epoxy resin, it is possible to achieve a measure against chipping and electrolytic corrosion similarly with respect to the case where the glass paper prepreg is laminated on a SMC.

In cases where the object on which the glass paper prepreg is laminated is a general-purpose epoxy CF prepreg that is composed of carbon fiber and epoxy resin and cured at 130°C, an epoxy resin obtained by mixing a bifunctional epoxy resin and an amine curing agent at a ratio of, e.g., 100:8-100:10 is charged into the resin impregnation tank of the vertical coater for coating the glass paper prepreg so that the curing characteristics will approximate those of the epoxy CF prepreg. This makes it possible for the epoxy CF prepreg and the glass paper prepreg to be cured in the same state and for the epoxy CF prepreg and the glass paper prepreg to be integrally molded at the same time. The curing characteristics of the resin used in the glass paper prepreg are the same as or similar to the curing characteristics of the resin of the epoxy CF prepreg; accordingly, even when molding a three-dimensional curved-surface material, the resin of the epoxy CF prepreg and the resin of the glass paper prepreg will flow into each other and be integrally cured at the same time, making it possible to obtain a molded body in which there is sufficient adhesive force between laminated layers of the epoxy CF prepreg and the glass paper prepreg.

Specifically, the resin used in coating the glass paper prepreg is configured to have curing characteristics matching the curing characteristics of the resin of the object on which the glass paper prepreg is laminated, irrespective of whether said object is a SMC, an epoxy CF prepreg, or the like, and the glass paper prepreg is coated with the resin, thereby making it possible to obtain a glass paper prepreg layer having high adhesive force.

The glass paper prepreg layer is a thin glass fiber substrate referred to as glass paper, but may be glass-fiber-reinforced plastic (GFRP, in which the resin is reinforced by glass fiber), in which case the fracture strength (load value at the time of fracture) and fracture toughness (resilience before the fracture load value is reached) are dramatically higher than in the case of painting with only resin.

Furthermore, a glass paper prepreg layer having high adhesive force with respect to a carbon-fiber-containing SMC layer or a CFRP layer produced using an epoxy CF prepreg will not readily peel from the underlying SMC layer or CFRP layer due to having high adhesive force, and also will have much higher resistance against chipping when hit by small stones than a painting surface.

Similarly, with a glass paper prepreg layer having high adhesive force, the carbon fiber in the underlying SMC layer or CFRP layer composed of carbon fiber will not be exposed due to peeling or fracture of the glass paper prepreg layer. Therefore, the carbon fiber will not come into contact with rainwater, and accordingly, no very low current (galvanic current) will flow even if steel or aluminum is located nearby. Thus, the glass paper prepreg has very high resistance to electrolytic corrosion.

## Claims

1. An automotive structural material that contains carbon-fiber-reinforced plastic, the automotive structural material being **characterized by** having
a base layer composed of a cured sheet-molding compound containing staple carbon fiber and a thermosetting resin, and
a protective layer that is laminated on the base layer and composed of a cured glass paper prepreg or glass cloth prepreg containing glass fiber and a thermosetting resin,
the base layer and the protective layer being integrally cured.

2. The automotive structural material according to claim 1, **characterized in that** the thickness of the protective layer is 0.15-0.50 mm.

3. The automotive structural material according to claim 2, **characterized in that** the electrical breakdown voltage is 3 kV or higher.

4. The automotive structural material according to claim 2, **characterized in that** the electrical breakdown voltage is 5 kV or higher.

5. The automotive structural material according to any of claims 1 to 4, **characterized in that** the protective layer includes glass paper having a basis weight of 50 g/m² or higher.

6. The automotive structural material according to any of claims 1 to 4, **characterized in that** the protective layer includes glass cloth having a basis weight of 100 g/m² or higher.

7. A method for manufacturing an automotive structural material that contains carbon-fiber-reinforced plastic, the method being **characterized by** including:
a lamination step for laminating a semi-cured-state sheet-molding compound that contains staple carbon fiber and a thermosetting resin, and a semi-cured-state glass paper prepreg or glass cloth prepreg that contains glass fiber and a thermosetting resin; and
a curing step for integrally curing the laminated sheet-molding compound and glass paper prepreg or glass cloth prepreg through the application of heat under applied pressure.

8. The method for manufacturing an automotive structural material according to claim 7, **characterized in that** the resin content of the glass paper prepreg or the glass cloth prepreg is 80-95 wt%.

9. The method for manufacturing an automotive structural material according to claim 7, **characterized in that** the resin flow in the glass paper prepreg or the glass cloth prepreg is 50-80%, the resin flow being expressed by the formula below. Resin flow (%) = (amount (g) of resin that has flowed out when press-molding is performed at 150°C and 0.3 MPa)/(weight (g) of prepreg before resin flows out due to press molding)

10. The method for manufacturing an automotive structural material according to claim 8, **characterized in that** the resin flow in the glass paper prepreg or the glass cloth prepreg is 50-80%, the resin flow being expressed by the formula below. Resin flow (%) = (amount (g) of resin that has flowed out when press-molding is performed at 150°C and 0.3 MPa)/(weight (g) of prepreg before resin flows out due to press molding)

11. The method for manufacturing an automotive structural material according to any of claims 7 to 10, **characterized in that** the glass paper prepreg includes glass paper having a basis weight of 50 g/m² or higher.

12. The automotive structural material according to any of claims 7 to 10, **characterized in that** the glass cloth prepreg includes glass cloth having a basis weight of 100 g/m² or higher.
